(19)

Europäisches
Patentamt
European
Patent Office
Office européen
des brevets

(11) **EP 2 889 807 A2**

(12) **EUROPEAN PATENT APPLICATION**

(43) Date of publication:
**01.07.2015 Bulletin 2015/27**

(51) Int Cl.:
***G06K 9/00*** (2006.01)          ***G06K 9/20*** (2006.01)

(21) Application number: **14199381.6**

(22) Date of filing: **19.12.2014**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **24.12.2013 JP 2013266073<br>09.10.2014 JP 2014208293** | (71) Applicant: **Ricoh Company, Ltd.<br>Tokyo 143-8555 (JP)**<br><br>(72) Inventor: **Kasahara, Ryosuke<br>Tokyo, 143-8555 (JP)**<br><br>(74) Representative: **Schwabe - Sandmair - Marx<br>Patentanwälte<br>Stuntzstraße 16<br>81677 München (DE)** |

(54) **Image processing device, image processing system, mobile object control apparatus, image processing method, and carrier means**

(57)    An image processing device (20, 30, 40) and an image processing method are provided. Each of the image processing device (20, 30, 40) and the image processing method obtains a polarized image captured by an imaging device (10) through a transparent member (60), and corrects (20) pixels of the polarized image such that the intensity of the polarized component data included in the polarized image corresponds to the intensity of the polarized component of the incident light that has not passed through the transparent member (60), based on positions of the pixels of the polarized image and a relationship between intensity of polarized components of incident light to the positions of the pixels and an angle of inclination of the transparent member (60).

**EP 2 889 807 A2**

**Description**

BACKGROUND

Technical Field

Example embodiments of the present invention generally relate to an image processing device, image processing system, mobile object control apparatus, image processing method, and a carrier means.

Background Art

JP-2011-150687-A discloses a three-dimensional object recognition device capable of recognizing an object that cannot be distinguished from another object if based only on the brightness data. Such object recognition is achieved as follows. An area-division polarizing filter is disposed over an imaging element of a camera to change the polarization directions of the light (P-polarized light and S-polarized light), which are obtained for each pixel. Accordingly, a P-polarized image having the P-polarized component data corresponding to the intensity of the P-polarized component as polarized component data, and an S-polarized image having the S-polarized component data corresponding to the intensity of the S-polarized component as polarized component data are obtained. Then, the polarization data such as sub-degree of polarization (SDOP) is obtained from these polarized images. Using this polarization data, an object can be recognized.

JP-2011-150687-A discloses a system that alerts a driver when the vehicle is travelling outside the lane. The system includes a camera inside the vehicle, which uses the results of recognition performed by a three-dimensional object recognition device, and processes the polarization data of a polarized image such as the image reflecting a road condition captured through the windscreen of the vehicle.

The attenuation of the polarized components included in the light that has passed through the windscreen is caused due to the angle of the windscreen that is oblique to the optical axis of the camera, and JP-2011-150687-A discloses the processes of electrically correcting such attenuation. JP-2011-150687-A also discloses the processes of increasing the P-polarized component data included in the obtained P-polarized image and the S-polarized component data included in the obtained S-polarized image by a certain degree (i.e., multiplying the S-polarized component data approximately by two and multiplying the P-polarized component data approximately by 1/0.9).

Alternatively, JP-2011-150687-A discloses, for example, a configuration in which an optical element that cancels the attenuation of the P-polarized component and the S-polarized component is disposed between the windscreen and the camera.

However, in such a method of correcting an attenuation factor, correction is evenly performed on the entire screen of the camera without considering dependency of polarization on the incidence angle. Accordingly, such correction is considered to be not effective. More specifically, the correction is not effective because the correction is evenly performed without considering the fact that the intensity of the polarized component of the incident light that has entered the camera through the windscreen varies as the incidence angle with reference to the optical axis of the camera varies. For the reasons described above, it is difficult to obtain accurate polarization data.

In view of the above, one object of the present invention is to obtain relatively accurate polarization data that corresponds to the intensity of the polarized component of the incident light that has not passed through a transparent member such as the windscreen of a vehicle, from the polarized image obtained by the imaging device through the transparent member.

SUMMARY

Embodiments of the present invention described herein provide an image processing device and an image processing method. Each of the image processing device and the image processing method obtains a polarized image captured by an imaging device through a transparent member, and corrects pixels of the polarized image such that the intensity of the polarized component data included in the polarized image corresponds to the intensity of the polarized component of the incident light that has not passed through the transparent member, based on positions of the pixels of the polarized image and a relationship between intensity of polarized components of incident light to the positions of the pixels and an angle of inclination of the transparent member.

According to one aspect of the present invention, relatively accurate polarization data can be obtained that corresponds to the intensity of the polarized component of the incident light that has not passed through a transparent member such as the windscreen of a vehicle, from the polarized image obtained by the imaging device through the windscreen.

BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.

FIG. 1 is a block diagram illustrating an outline of the configuration of a mobile object control apparatus including an image processing device, according to an example embodiment of the present invention.

FIG. 2 is a block diagram of a computer system according to an example embodiment of the present invention, which is the hardware realizing a windscreen correction unit, a brightness-polarization superposition unit, an image processing/image recognition unit, and a vehicle controller each illustrated in FIG. 1.

FIG. 3 is a front view of an optical filter provided for the imaging device illustrated in FIG. 1, according to an example embodiment of the present invention.

FIG. 4 is a sectional view of an optical filter, an imaging element, and a substrate provided for the imaging device illustrated in FIG. 1, according to an example embodiment of the present invention.

FIG. 5 is a functional block diagram of the windscreen correction unit illustrated in FIG. 1, according to an example embodiment of the present invention.

FIG. 6 illustrates a light beam that passes through a windscreen and enters the imaging device of FIG. 1 horizontally to the optical axis of the imaging device, according to an example embodiment of the present invention.

FIG. 7 illustrates a light beam that passes through a windscreen and enters the imaging device of FIG. 1 obliquely to the optical axis of the imaging device, according to an example embodiment of the present invention.

FIGS. 8A to 8D illustrate the transmittance, SDOP, P/S, and $\theta_{i1}$ when the angle which the surface of the windscreen illustrated in FIG. 7 forms with the optical axis is 21° and the reflective index of the windscreen is 1.14, according to an example embodiment of the present invention.

FIGS. 9A to 9D illustrate the transmittance, SDOP, P/S, and $\theta_{i1}$ when the angle which the surface of the windscreen illustrated in FIG. 7 forms with the optical axis is 30° and the reflective index of the windscreen is 1.4, according to an example embodiment of the present invention.

FIG. 10 illustrates a model of reflection on an object, according to an example embodiment of the present invention.

FIG. 11 is a functional block diagram of the brightness-polarization superposition unit of FIG. 1, according to an example embodiment of the present invention.

FIGS. 12A and 12B are examples of the brightness image and the polarized-light superposed image, respectively, which are directly captured without any windscreen by the imaging device of FIG. 1 without operating a windscreen correction unit, according to an example embodiment of the present invention.

FIGS. 13A and 13B are examples of the brightness image and the polarized-light superposed image, respectively, which are captured through a windscreen by the imaging device of FIG. 1 without operating a windscreen correction unit, according to an example embodiment of the present invention.

FIGS. 14A and 14B are examples of the polarized-light superposed image, which are captured through a windscreen by the imaging device of FIG. 1 with operating a windscreen correction unit, according to an example embodiment of the present invention.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), digital signal processors (DSPs), application-specific-integrated-circuits (ASICs), field programmable gate arrays (FPGAs) computers or the like. These terms in general may be collectively referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Example embodiments of the present invention are described below with reference to the drawings.

<Outline of Mobile Object Control Apparatus>

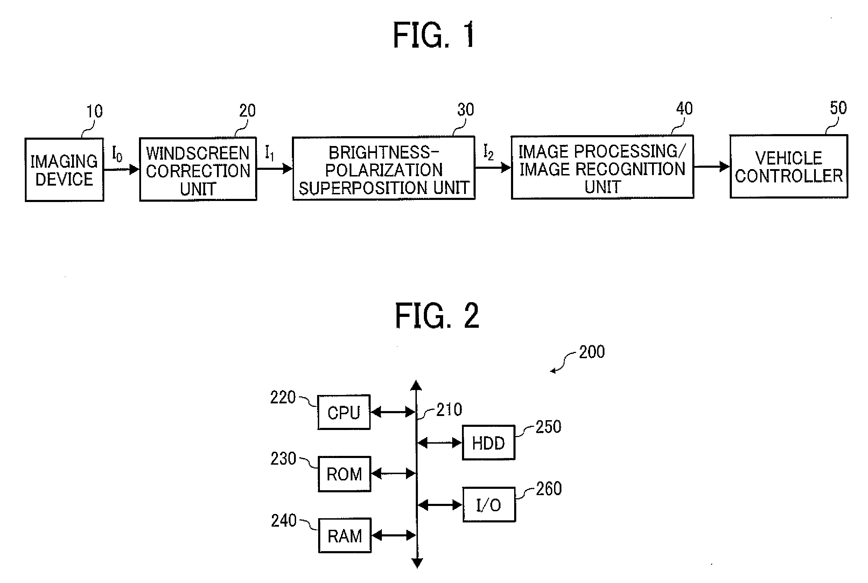

FIG. 1 is a block diagram illustrating an outline of the configuration of a mobile object control apparatus including an image processing device according to an example embodiment of the present invention.

The mobile object control apparatus includes an imaging device 10, a windscreen correction unit 20, a brightness-polarization superposition unit 30, an image processing/image recognition unit 40, and a vehicle controller 50. In the present example embodiment, the windscreen correction unit 20, the brightness-polarization superposition unit 30, and the image processing/image recognition unit 40 together configure an image processing device. For example, the image processing device and the imaging device 10 together configure an image processing system, and the image processing device and the vehicle controller 50 together configure a mobile object control apparatus.

The mobile object control apparatus is installed in a mobile object such as a vehicle, and when a person or another vehicle is detected in an imaging area ahead of the windscreen as a transparent member, the mobile object control apparatus reduces the speed or stops the vehicle. Note that the mobile object control apparatus according to the present example embodiment may be applied to mobile objects other than vehicles. For example, the mobile object control apparatus according to the present example embodiment may be used to control robots.

The imaging device 10 includes an imaging lens, an imaging element, and an optical filter, and serves as a polarizing camera that captures polarized images. More specifically, the imaging device 10 forms an image of the incident light from an imaging area ahead of the windscreen on the imaging element, and converts the formed image into an electrical signal. Accordingly, an image $I_0$ of the imaging area is obtained. Here, the image $I_0$ consists of P-polarized images that include P-polarized component data for each pixel, and S-polarized images that include S-polarized component data for each pixel. A method for obtaining such P-polarized images and S-polarized images is described later in detail.

The image $I_0$ is input to the windscreen correction unit 20 that serves as a correction unit in the present example embodiment, and at least one of the intensity of the P-polarized component data and the intensity of the S-polarized component data is corrected according to the incidence angle with reference to the optical axis of the imaging device 10. Accordingly, an image $I_1$ is generated where the ratio of the intensity of the S-polarized component data corresponding to the S-polarized components of light beam that have been attenuated when passing through the windscreen to the intensity of the P-polarized component data corresponding to the P-polarized components of the light beam becomes constant regardless of the incidence angle with reference to the optical axis of the imaging device 10. The operation of the windscreen correction unit 20 is described later in detail.

The image $I_1$ is input to the brightness-polarization superposition unit 30. The brightness-polarization superposition unit 30 generates a brightness image and polarization data such as SDOP from the image $I_1$, and superposes the generated polarization data on the generated brightness image to generate an image $I_2$. The operation of the brightness-polarization superposition unit 30 is described later in detail.

The image $I_2$ is input to the image processing/image recognition unit 40. The image processing/image recognition unit 40 uses the brightness data and polarization data included in the image $I_2$ to perform processes such as extraction of the recognized object. Because the polarization data is superposed on the brightness image in the image $I_2$, any known image recognition processes for brightness images may be used to recognize vehicles or white lines. In other words, it is not necessary to newly develop image processing or image recognition processes for polarized images. Accordingly, a successful rate in recognition is improved while reducing a rate of erroneous detection according to the configuration of the present example embodiment.

The results of the recognition by the image processing/image recognition unit 40 are input to the vehicle controller 50. The vehicle controller 50 controls the vehicle by applying a brake to the vehicle or assisting the steering based on the input results of the recognition.

<Hardware Configuration of Image Processing Device and Vehicle Controller

FIG. 2 is a block diagram of a computer system according to the present example embodiment, which is the hardware realizing the windscreen correction unit 20, the brightness-polarization superposition unit 30, the image processing/image recognition unit 40, and the vehicle controller 50 illustrated in FIG. 1.

The computer system 200 includes a central processing unit (CPU) 220 that performs several kinds of controlling processes and other processes, a read only memory (ROM) 230, a random access memory (RAM) 240, hard disk drive (HDD) 250, an input-output (I/O) 260, and a bus 210 to which these elements are connected. Note that the imaging device 10 is connected to the I/O 260.

The RAM 240 serves as a working area of the CPU 220. The ROM 230 (including rewritable memory) is used as a storage area of various control programs or fixed data such as tables and parameters.

Any desired recording medium such as digital versatile disk (DVD) ROM that stores the image processing programs that implement the windscreen correction unit 20, the brightness-polarization superposition unit 30, the image processing/image recognition unit 40, and the vehicle controller 50 may be set to an optical drive of the computer system 200, to store the image processing programs onto the HDD 250. These image processing programs are executed as necessary upon being loaded onto the RAM 240. Polarized images to be processed are input to the I/O 260 from the imaging device 10.

<Obtaining P-polarized Image and S-polarized Image>

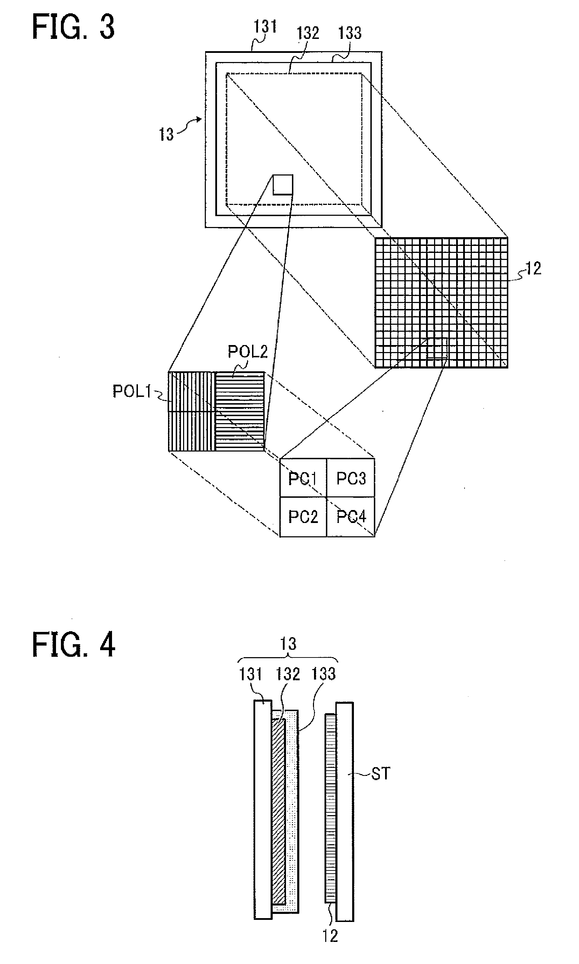

Next, a method for obtaining P-polarized images and S-polarized images using the imaging device 10 is described below in detail. FIG. 3 is a front view of an optical filter provided for the imaging device 10 illustrated in FIG. 1, according to the present example embodiment. FIG. 4 is a sectional view of an optical filter, an imaging element, and a substrate provided for the imaging device 10 illustrated in FIG. 1, according to the present example embodiment.

In the optical filter 13, a filter substrate 131 is a transparent substrate that transmits the incident light that has entered the optical filter 13 through an imaging lens. On the side of an imaging element 12 of the filter substrate 131, a polarizing-filter layer 132 is formed. Further, a packed bed 133 is formed so as to cover the polarizing-filter layer 132.

In the light that has entered the optical filter 13, the light that has passed through the polarizing-filter layer 132 enters the pixels of the imaging element 12 on a substrate ST. An area-division polarizing filter with sub-wavelength structure (SWS) is provided for the polarizing-filter layer 132 by a polarizer corresponding to the pixel size of the imaging element 12.

In the present example embodiment, rectangular S-polarized-component transmissive areas POL1 and P-polarized-component transmissive areas POL2 are alternately arranged in a lateral direction (i.e, row direction) as a polarizer. Accordingly, vertically-arranged pixels PC1 and PC2 of the imaging element 12 face the S-polarized-component transmissive area POL1, and vertically-arranged PC3 and PC4 placed next to the pixels PC1 and PC2 on the right side face the P-polarized-component transmissive area POL2.

For this reason, the output of the photoelectric conversion from the pixels PC1 and PC2 includes S-polarized component data, and does not include P-polarized component data, In a similar manner, the output of the photoelectric conversion from the pixels PC3 and PC4 includes P-polarized component data, and does not include S-polarized component data.

Accordingly, a mean value of the P-polarized component data of the two pixels on both sides, i.e., a mean value of the output of the photoelectric conversion from the two pixels PC3 and PC4 on the right side and the output of the photoelectric conversion from the two pixels on the left side of the pixels PC1 and PC2, is used as the P-polarized component data of the pixels PC1 and PC2. In a similar manner, a mean value of the S-polarized component data of the two pixels on both sides, i.e., a mean value of the output of the photoelectric conversion from the two pixels PC1 and PC2 on the left side and the output of the photoelectric conversion from the two pixels on the right side of the pixels PC3 and PC4, is used as the S-polarized component data of the pixels PC3 and PC4. Similar processes are applied to the other pixels,

By so doing, a P-polarized image and an S-polarized image are obtained for each pixel of the imaging element 12. The P-polarized image is the output of the photoelectric conversion including the P-polarized component data, and the S-polarized image is the output of the photoelectric conversion including the S-polarized component data.

In the present example embodiment, a differential polarized image is formed by the output of the photoelectric conversion from the pixels PC1 and PC2 not including the P-polarized component data and the output of the photoelectric conversion from the pixels PC3 and PC4 not including the S-polarized component data. Such a differential polarized image is used for various kinds of data detection.

In the present example embodiment, a monochrome sensor is assumed as an imaging element, but no limitation is indicated therein and a color sensor may be used.

<Configuration of Windscreen Correction Unit>

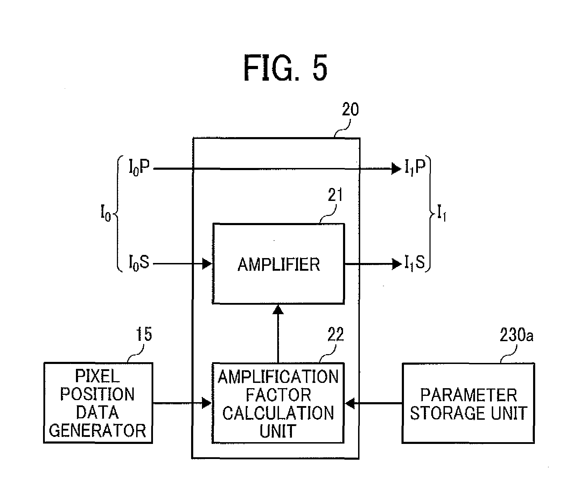

FIG. 5 is a functional block diagram of the windscreen correction unit 20 illustrated in FIG. 1, according to the present example embodiment. As illustrated in FIG. 5, the windscreen correction unit 20 includes an amplifier 21, and an amplification factor calculation unit 22.

A pixel position data generator 15 is provided inside the imaging device 10. The pixel position data generator 15 generates pixel position data indicating the on-image positions of the pixels of an S-polarized image $I_0S$, and transmits the generated pixel position data to the amplifier 21 through the amplification factor calculation unit 22. In this embodiment, a parameter storage unit 230a that serves as a correction parameter storage unit is arranged in the ROM 230. The amplification factor calculation unit 22 reads correction parameters that are set and stored in advance in the parameter storage unit 230a, from the parameter storage unit 230a. Alternatively, the pixel position data generator 15 may be provided in the computer system 200.

The amplification factor calculation unit 22 refers to the pixel position data and the correction parameters to calculate an amplification factor of the amplifier 21, and sets the calculated amplification factor to the amplifier 21. The S-polarized image $I_0S$ is input to the amplifier 21, and the intensity of the S-polarized component data of the S-polarized image $I_0S$ is amplified at a prescribed amplification factor set by the amplification factor calculation unit 22. As a result, an S-polarized image $I_1S$ is generated and output. A P-polarized image $I_0P$ is directly output as a P-polarized image $I_1P$. Alternatively, a P-polarized image may be attenuated at a prescribed attenuation factor and an S-polarized image may be directly output just as it is, or both a P-polarized image and an S-polarized image may be processed, as will be described later.

The correction parameters stored in the parameter storage unit 230a are prescribed in view of the on-image positions of the pixels of the S-polarized image $I_0S$, the angle of inclination of the windscreen, or the like. Note that these positions of the pixels of the S-polarized image $I_0S$ correspond to the angles of incidence with reference to the optical axis of the imaging device 10. The correction parameters and the calculation algorithm used by the amplification factor calculation unit 22 are described later in detail.

<Influence of Windscreen on Polarized Components>

Next, the influence of a windscreen on polarized components are described. In the present example embodiment, a theoretical model of the influence of a windscreen on polarization is proposed to analyze such influence. This theoretical model is based on the Fresnel reflection formula, and multiple reflection is not taken into consideration.

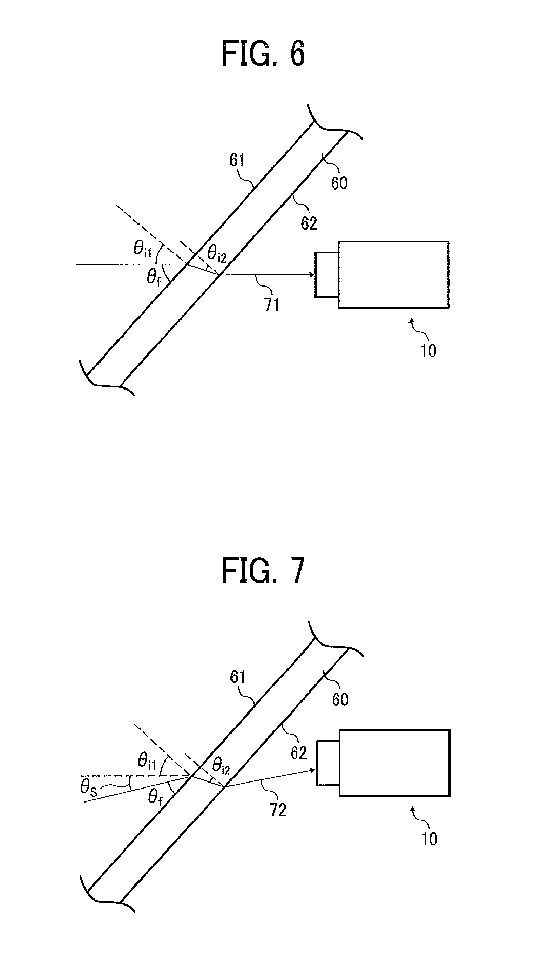

FIG. 6 illustrates a light beam that passes through a windscreen and enters the imaging device 10 horizontally to the optical axis of the imaging device 10 (i.e., a light beam directed to the center of the vertical angle of view of the imaging device 10), according to the present example embodiment. FIG. 7 illustrates a light beam that passes through a windscreen and enters the imaging device 10 obliquely to the optical axis of the imaging device 10 (i.e., a light beam not directed to the center of the vertical angle of view of the imaging device 10), according to the present example embodiment.

In FIG. 6, the reflective index of the windscreen 60, and the angle of inclination of the windscreen 60 (i.e., the angle with reference to the horizontal plane) are referred to as n and $\theta_f$, respectively. Moreover, the incidence angle of a light beam 71 that enters the imaging device horizontally to the optical axis of the imaging device 10 with reference to a first surface 60, and the incidence angle with reference to the air (i.e., the exiting angle with reference to a second surface 62) are referred to as $\theta_{i1}$ and $\theta_{i2}$, respectively.

The angles described above have a relationship with each other as in the following Equations (1) and (2), respectively.

$$\theta_{i1} = (\pi/2) - \theta_f \ ... \ (1)$$

$$\sin\theta_{i2} = (1/n)\sin\theta_{i1} \ ... \ (2)$$

The reflectivity $R_{1S}$ and R1P of the S-polarized component and P-polarized component on the first surface 61 are expressed by the following Equations (3) and (4).

$$R_{1S}=\{(\cos\theta_{i1}-n\cos\theta_{i2})/(\cos\theta_{i1}+n\cos\theta_{i2})\}^2 ... (3)$$

$$R_{1P}=\{(\cos\theta_{i2}-n\cos\theta_{i1})/(\cos\theta_{i1}+n\cos\theta_{i2})\}^2 ... (4)$$

The reflectivity $R_{2S}$ and $R_{2P}$ of the S-polarized component and P-polarized component on the second surface 62 are expressed by the following Equations (5) and (6), respectively.

$$R_{2S}=\{(n\cos\theta_{i2}-\cos\theta_{i1})/(n\cos\theta_{i2}+\cos\theta_{i1})\}^2 ... (5)$$

$$R_{2P}=\{(n\cos\theta_{i1}-\cos\theta_{i2})/(n\cos\theta_{i2}+\cos\theta_{i1})\}^2 ... (6)$$

Assuming that there is no interference and Equations (1) to (6) of reflectivity are taken into consideration, the transmittance Ts and $T_P$ of the S-polarized component and P-polarized component of the entirety of the windscreen 60 in view of the first surface 61 and the second surface 62 are expressed by the following Equations (7) and (8), respectively.

$$T_S=(1-R_{1S})(1-R_{2S}) ... (7)$$

$$T_P=(1-R_{1P})(1-R_{2P}) ... (8)$$

In the case of FIG. 7, an incidence angle $\theta_s$ defined by the following Equation (9) is used, The Equations (2) to (8) are applicable to the case of FIG. 7.

$$\theta_{i1}=(\pi/2)-\theta_f+\theta_s ... (9)$$

<Calculation Result of Theoretical Model>

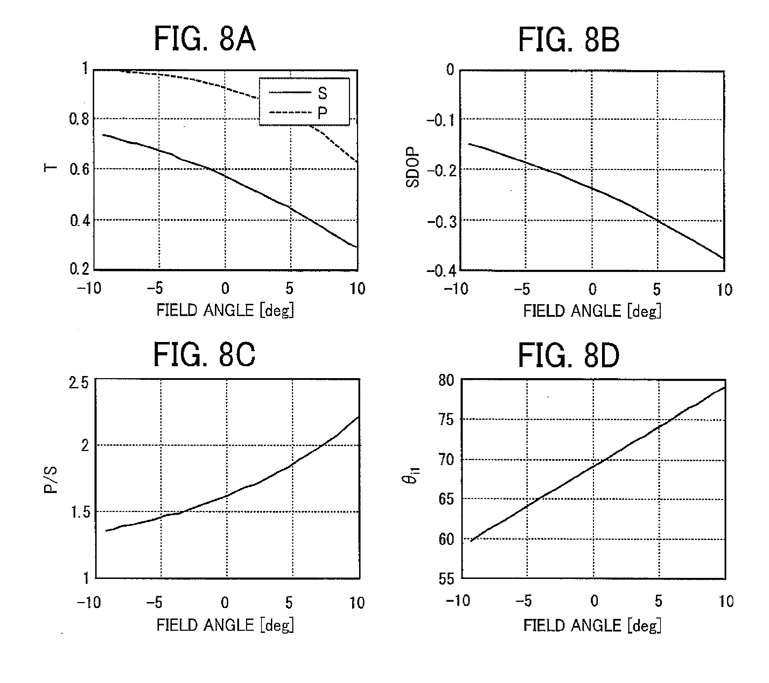

The result of calculation obtained when the theoretical model described above is used is described below. FIGS. 8A to 8D illustrate the transmittance T(Ts, $T_P$), SDOP, P/S, and $\theta_{i1}$ when $\theta_f$=21° and n=1.4, according to the present example embodiment. Regarding the value of $\theta_f$, vehicle types where angle of inclination of the windscreen 60 is relatively small are assumed. In FIG. 8C, P/S (polarization ratio) indicates the ratio of the intensity of the S-polarized component to the intensity of the P-polarized component. In FIGS. 8A to 8D, "Field angle" of the lateral axis of the graph indicates the angle of view of the imaging device 10 (i.e., the inclination from the optical axis) in the vertical direction, where positive and negative values indicate upward directions (corresponding to the upper half of the screen) and downward directions (corresponding to the down half of the screen), respectively.

As illustrated in FIG. 8C, P/S ranges from about 2.2 to 1.3 between the upper half and the down half of the screen. Because very slight difference is to be detected in the polarization data, this range is considered significantly large. This is because the incidence angle $\theta_{i1}$ to the windscreen 60 is about 60° to 80° (see FIG. 8D), and the reflectivity of the S-polarized component is large.

As described above, the influence of the windscreen 60 on the intensity of polarized components varies widely depending on the vertical position of the screen, i.e., the incidence angle of the light beam. For this reason, the conventional technology in which correction is evenly performed over the screen is not sufficient to achieve desired effects.

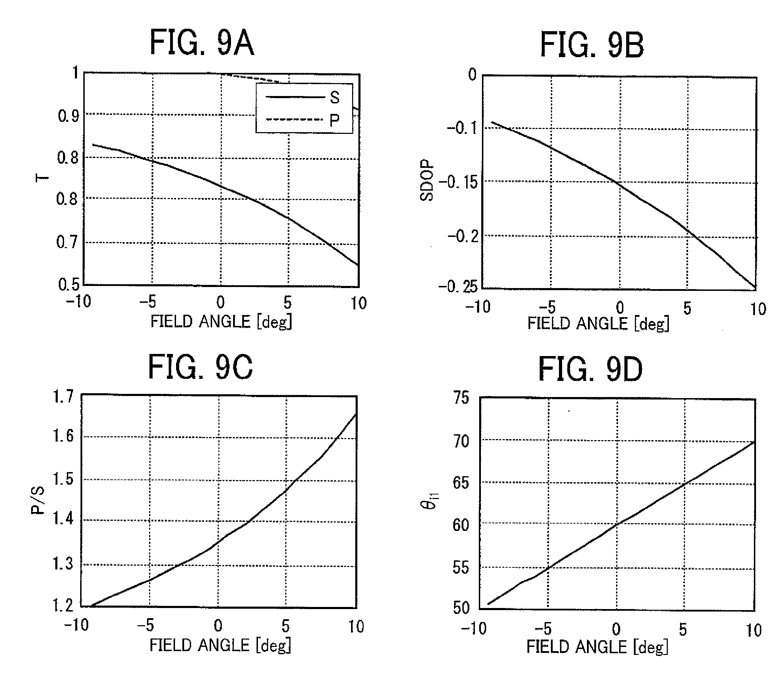

FIGS. 9A to 9D illustrate the transmittance T(Ts, $T_P$), SDOP, P/S, and $\theta_{i1}$ when $\theta_f$=30° and n=1.4, according to the present example embodiment. Regarding the value of $\theta_f$, vehicle types where angle of inclination of the windscreen 60 is relatively large are assumed. In this case, the incidence angle $\theta_{i1}$ to the windscreen 60 is about 50° to 70° (see FIG. 9D), which is smaller than the incidence angle $\theta_{i1}$ of FIG. 8D. Moreover, the amount of change in P/S illustrated in FIG. 9C is smaller than that of FIG. 8C. However, the range of P/S is still large.

\<Intensity Correction of Polarized Component Data\>

In view of the above circumstances, the amplifier 21 of the windscreen correction unit 20 amplifies the intensity of the S-polarized component such that the values of P/S illustrated in FIG. 8C and FIG. 9C, i.e., the ratio of the intensity of the P-polarized component to the intensity of the S-polarized component in the light beam that has passed through the windscreen, become constant regardless of the value of "Field angle". In the present example embodiment, "P/S=1" regardless of the value of "Field angle" is achieved by multiplying the S-polarized image $I_0S$ by the value of P/S in the characteristic curve of "polarization ratio (P/S) - angle of view (Field angle)" illustrated FIG. 8C and FIG. 9C, according to the value of "Field angle". In the present example embodiment, the case in which P/S=1 is described. However, P/S may be set to any fixed value.

In order to simplify the calculation, a linear function of the characteristic curve of "polarization ratio (P/S) - angles of view (Field angle)" may be approximated (linear approximation), and the following Equation (10) may be used to correct the S-polarized image $I_0S$.

$$I_1S(x,\ y)=I_0S(x,\ y)^*\{d_s{}^*(y/y_{max})+c_s\}\ ...\ (10)$$

In Equation (10), $I_0S(x,\ y)$ and $I_1S(x,\ y)$ indicate the intensity of the S-polarized component data in the pixels at the screen coordinates $(x,\ y)$ of the S-polarized images $I_0S$ and $I_1S$, respectively. The point of origin of the screen coordinates $(x,\ y)$ are at the top-left end of the screen. Moreover, $d_s$ and $c_s$ are the parameters that define the inclination and y intercept of the linear function, and $y_{max}$ indicates the y coordinates of the bottom end of the screen. Further, $(y/y_{max})$ is obtained by converting angle of view (Field angle) of the imaging device 10 so as to be 0 and 1 at the top end and bottom end of the screen, respectively. In other words, $(y/y_{max})$ is a correction parameter that indicates the relationship between the pixel position data of the S-polarized image and incidence angle formed with the optical axis of the imaging device 10. Note that $d_s$ and $c_s$ are uniquely determined values by, for example, experiments, for the type of the windscreen. $y_{max}$ is determined such that the value of $\{d_s{}^*(y/y_{max})+c_s\}$ becomes equal to or greater than 0 and equal to or less than 1. $y_{max}$ ranges from 0 to 1 if the maximum value is set to 1, but if the maximum value has a fixed value as described above, $y_{max}$ has a value according to that fixed value.

The amplification factor calculation unit 22 of the windscreen correction unit 20 calculates the value of $\{d_s{}^*(y/y_{max})+c_s\}$ as an amplification factor of the amplifier 21, and sets the calculated amplification factor to the amplifier 21. Here, $y_{max}$ is prescribed and is stored in the parameter storage unit 230a in advance. y is input as pixel position data. Moreover, $d_s$ and $c_s$ are prescribed and is stored in the parameter storage unit 230a in advance. For example, when $\theta_f$=21°, the values of $d_s$=0.8(2.2-1.4) and $c_s$=1.4 according to FIG. 8C are used as set values. For example, when $\theta_f$=30°, the values of $d_s$=0.4(1.6-1.2) and $c_s$=1.2 according to FIG. 9C are used as set values.

Instead of amplifying the S-polarized image $I_0S$, the P-polarized image $I_0P$ may be attenuated by using the following Equation (11).

$$I_1P(x,\ y)=I_0P(x,\ y)^*\{d_P{}^*(y/y_{max})+c_P\}\ ...\ (11)$$

Alternatively, instead of performing linear approximation, a correction table where $d_s$ as described above or $d_P$ in Equation (11) is the function of y may be used. If a plurality of pairs of $d_s$ or $c_s$ are set to the parameter storage unit 230a according to the angle $\theta_f$ of the windscreen, it becomes possible to deal with cases where the angle $\theta_f$ of the windscreen varies. In a similar manner, if a plurality of pairs of $d_s$ or $c_s$ are set to the parameter storage unit 230a according to the angles of view or the number of the pixels in the vertical direction of the imaging device 10, it becomes possible to deal with cases where the angles of view or the number of the pixels in the vertical direction of the imaging device 10 varies.

As described above, in the intensity correction of the polarized component data according to the present example embodiment, the intensity of the polarized component data is corrected based on the positions of the pixels of a polarized image and the relationship between the intensity of the polarized components of the incident light to these positions of the pixels and the angle of inclination of the windscreen 60. Accordingly, the intensity of the polarized component data included in the polarized image is corrected to correspond to the intensity of the polarized component of the incident light that has not passed through the windscreen 60.

<Superimposition of Polarization Data on Brightness Image>

Next, polarization is described, and then the superimposing processes of the polarization data performed by the brightness-polarization superposition unit 30 on a brightness image is described.

The reflectance characteristic of the surface of object is expressed by bi-directional reflectance distribution function (BRDF). A "BRDF on certain point" of the surface of object is dependent on both the incident direction and reflection direction, and is defined as a ratio of the intensity of the light reflected towards a point of observation to the intensity of the incident light from the illumination direction.

Various types of reflection model of polarization have been proposed. In the following description, "Torrance-Sparrow model" is used for a specular-reflection component, and "Lambert model" is used for a diffuse reflection component.

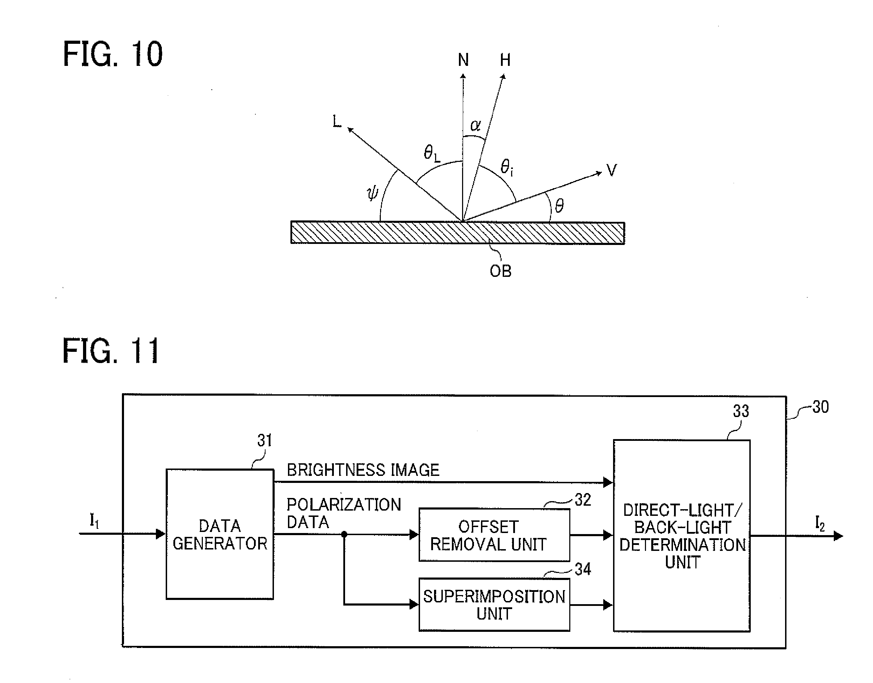

FIG. 10 illustrates a model of reflection on an object OB, according to the present example embodiment of the present invention. In FIG. 10, N indicates the "outward normal vector" at a reflection point on the object OB. L indicates the "light source vector" that is directed to the light source from the reflection point. V indicates the "line-of-vision vector" that is directed to the observation position from the reflection point. H indicates the "bisection vector" that bisects the angle which the light source vector L forms with the line-of-vision vector V. Note that the vectors: N, L, V, and H are coplanar. On the same plane, angles: $\psi$, $\theta_L$, $\alpha$, $\theta_i$, and $\theta$ are defined as follows as illustrated in FIG. 10.

"S-polarized light BRDF: $\rho s(\psi, \theta)$" by the object OB is defined by the following Equation (12), and "P-polarized light BRDF: $\rho_P(\psi, \theta)$ by the object OB is defined by the following Equation (13).

$$\rho_S(\psi, \theta) = k_S R_S(\theta_i)D + k_d\cos\theta_L \ ... \ (12)$$

$$\rho_P(\psi, \theta) = k_P R_P(\theta_i)D + k_d\cos\theta_L \ ... \ (13)$$

Note that the first members of the right side of the Equations (12) and (13) are members of specular reflection model (Torrance-Sparrow model), and the second members of the right side of the Equations (12) and (13) are members of diffuse reflection model (Lambert model). The members ks, $k_P$, and $k_d$ indicate a specular reflection coefficient of the S-polarized light, a specular reflection coefficient of the P-polarized light, and a diffuse reflection coefficient, respectively.

Moreover, $R_S(\theta_i)$ and $R_P(\theta_i)$ indicate the "Fresnel reflection formula" with reference to the S-polarized light and the P-polarized light, respectively. $R_S(\theta_i)$ and $R_P(\theta_i)$ are defined by the following Equations (14) and (15).

$$R_S(\theta_i) = \{(n_1\cos\theta_i - n_2\cos\theta_i')/(n_1\cos\theta_i + n_2\cos\theta_i')\}^2 \ ... \ (14)$$

$$R_P(\theta_i) = \{(n_1\cos\theta_i' - n_2\cos\theta_i)/(n_1\cos\theta_i' + n_2\cos\theta_i)\}^2 \ ... \ (15)$$

In the Equations (14) and (15), $n_1$ and $n_2$ indicate the reflective indexes of the air and the object OB, respectively.

The angle: $\theta_i'$ has a relationship with the angle: $\theta_i$ and the reflective indexes: $n_1$ and $n_2$ as in the following Equation (16).

$$\sin\theta_i' = (n_1/n_2)\sin\theta_i \ ... \ (16)$$

Accordingly, $\theta_i'$ is defined as in the following Equation (17).

$$\theta_i' = \sin^{-1}\{(n_1/n_2)\sin\theta_i\} \ ... \ (17)$$

By the members of the Fresnel reflection formula described above, polarization dependence is taken into consideration as a component of the reflection model.

The member D in the Equations (12) and (13) indicates the "normal-line distribution member" of a minute area at the reflection point, and is defined by the following Equation (18).

$$D = \exp(-\alpha^2/2a^2) \dots (18)$$

In Equation (18), $\alpha$ indicates the central coordinate value of the distribution function, and corresponds to the angle parameter: $\alpha$ illustrated in FIG. 10. Moreover, "a" indicates a standard deviation in the distribution function, "a" also serves as a "parameter of angular distribution" on the minute area. The normal-line distribution: D is a Gaussian distribution that has a normal distribution.

Next, the polarization data to be superposed on a brightness image is described. Various kinds of polarization data may be used, but "degree of polarization", "sub-degree of polarization (SDOP)", and "polarization ratio" are described below as the polarization data.

The degree of polarization (DOP) is defined by known Stokes parameters: $S_0$, S1, $S_2$, and S3, which relate to the polarization. The DOP is defined by the following Equation (19) with the Stokes parameters: $S_0$, $S_1$, $S_2$, and $S_3$.

$$DOP = \{\sqrt{(S_1^2 + S_2^2 + S_3^2)}\}/S_0 \dots (19)$$

The SDOP is defined by the following Equation (20) with the Stokes parameters: So and S1.

$$SDOP = S_1/S_0 = \{I(0, \varphi) - I(90, \varphi)\}/\{I(0, \varphi) + I(90, \varphi)\} \dots (20)$$

In Equation (20), $I(0, \varphi)$ and $I(90, \varphi)$ indicate the light intensity through a polarizer when the axial angle is zero degree and the light intensity through a polarizer when the axial angle is ninety degree, respectively.

In the "area-division polarizing filter" described above, $I(0, \varphi)$ and $I(90, \varphi)$ indicate the light-receptive intensity of a pixel that has received the transmission light through the S-polarized-component transmissive area POL1, and the light-receptive intensity of a pixel that has received the transmission light through the P-polarized-component transmissive area.

When the Stokes parameters: $S_2 = S_3 = 0$, the following Equation (21) holds true.

$$DOP = |SDOP| \dots (21)$$

For this reason, the SDOP in this case is also referred to as "degree of polarization".

The "polarization ratio (P/S)" is a ratio of $I(0, (\varphi)$ to $I(90, \varphi)$, and is defined by the following Equation (22).

$$Polarization\ Ratio = I(0, \varphi)/I(90, \varphi) \dots (22)$$

Because the polarization ratio is a ratio of $I(0, \varphi)$ to $I(90, \varphi)$ as described above, the polarization ratio may be defined by the following Equation (23) in place of Equation (22).

$$Polarization\ Ratio = I(90, \varphi)/I(0, \varphi) \dots (23)$$

The brightness-polarization superposition unit 30 may superimpose any desired one of the three kinds of polarization data (DOP, SDOP, and polarization ratio) on the brightness data to obtain the output image $I_2$ described above.

The brightness data may be obtained as follows. The polarizing-filter layer 132 provided for the imaging device 10 illustrated in FIG. 1 is an "area-division polarizing filter". In other words, polarizing-filter elements that transmit the P-polarized components and polarizing-filter elements that transmit the S-polarized components are two-dimensionally arranged on the polarizing-filter layer 132.

Accordingly, the imaging area of the imaging element 12 is expressed by two-dimensional (x, y) coordinates (i.e., the screen coordinates described above), and the intensity of the S-polarized component and the P-polarized component received by the pixel at the position: (x, y) is referred to by $I_S$ (x, y) and $I_P$ (x, y), respectively.

For the purposes of simplification, the brightness image: $I_{bright}$ (x, y) is expressed by the following Equation (24).

$$I_{bright}(x, y) = \{I_S(x, y) + I_P(x, y)\}/2 \ ... \ (24)$$

Assuming that the calculation of superposition is [SPI], the superposition of the brightness data and the polarization data may be expressed by the following Equation (25).

$$I_{bright}(x, y) \ [SPI] \ (Polarization \ Data) \ ... \ (25)$$

Any of the DOP, SDOP, and polarization ratio may be used as the polarization data.

The superposition may be performed by various types of calculation. In particular, calculating a linear sum and multiplication are easily achieved. A linear-sum method is expressed by the following Equation (26).

$$I_{bright}(x, y) \ [SPI] \ (Polarization \ Data) = I_{bright}(x, y) + Kx \ (Polarization \ Data) \ ... \ (26)$$

A multiplication method is expressed by the following Equation (27).

$$I_{bright}(x, y) \ [SPI] \ (Polarization \ Data) = I_{bright}(x, y) + xKx \ (Polarization \ Data) \ ... \ (27)$$

In Equations (26) and (27), the polarization data is superposed on a brightness image as a change in brightness on each pixel. Accordingly, in the right side of Equations (26) and (27), a pixel to be added or multiplied has equal coordinates (x, y). Note that K in the right side of Equations (26) and (27) is a constant indicating the degree of the superposition and may have a desired value according to specific conditions of the superposition.

In the reflection model described above with reference to FIG. 10, the polarization state of the reflection light may be expressed by variables of the material of the object OB (reflective index, state of surface, inner-dispersion coefficient), the angle which the light source forms with the object, and the angle which the object forms with the observation point. In other words, the polarization state may be expressed by the following Equation (28).

$$Polarization \ State = F(Light\text{-}source \ State, \ Material, \ Angle) \ ... \ (28)$$

In Equation (28), F indicates a function.

In Equation (28), the variables are defined as follows. When any two of the light-source state, the material, and the angle are determined, the other one is determined accordingly.

Light-source State=Angular Distribution of $\psi$
Material=$k_S$, $k_P$, $k_d$, $n_2$, etc.
Angle=$\theta$

In the reflection model described above with reference to FIG. 10, the members (Rs, Rp) that indicate "specular light of regular reflection" on the surface of the object OB characterize the polarization state. When the imaging device 10 and the light source form the same angle with the object OB to be observed, almost no specular light is reflected. As a result, "polarization data is not obtained".

There may be such difficulties when the light-source state is not controllable. For this reason, the following matters are to be considered if the application to vehicle-installed use where the conditions of the light source cannot be fixed are assumed.

Because the polarization state is defined as in Equation (28), in vehicle-installed cameras that do not project irradiation light, "the polarization data of a polarized image" varies depending on the light-source state. In other words, the polarization data (e.g., SDOP) varies depending on the light-source state when distinguishing "objects of different materials such as road surface and white lines". Although the polarization data also varies depending on the angle, the variations in polarization data due to the angle may be ignored when "objects on the road with the same angle" are to be observed.

When "image recognition" is performed with the output image $I_2$ where the polarization data is superimposed on the brightness data, recognition is to be performed with some kind of feature that characterizes the object. If only the polarization state of the object is used as a feature, the image recognition is "influenced by the light-source state".

For this reason, it is desired that "feature consistent with the polarization state" independent from the light-source state be used to perform image recognition. According to the Equations (12) and (13), the intensity of reflection (rotatory power) of the S-polarized component and P-polarized component varies depending on the angle of the light (i.e., angle: $\psi$ in FIG. 10 determined by angle: $\theta_L$). However, the rotatory power of the P-polarized light is always greater than that of the S-polarized light. Moreover, the "difference in rotatory power" between the S-polarized component and the P-polarized component is greater as the surface reflection is greater (i.e., as the inner dispersion is smaller).

At the actual use of vehicle-installed cameras, it is assumed that "almost all the objects receive front lighting in a condition of direct light. By contrast, it is assumed that "almost all the objects receive backlighting in a condition of backlight".

In view of the assumption as above, when various kinds of objects are captured, it is considered that "there is an imbalance between conditions of direct light and backlight" in an average value of the polarization data such as SDOP (sub-degree of polarization).

In view of the circumstances as described above, it is desired that the "feature" be selected according to the following policies.

(i): The influence of the light-source state such as direct light and backlight is briefly cancelled by removing "the offset of the polarization data such as SDOP over the entire screen".

(ii): When it is in a direct-light state, i.e., when the angle which an imaging unit forms with an object is close to the angle which the light source forms with the object, "the volume of the polarization data is small". For this reason, when it is in a direct-light state, it is assumed that "there is no polarization data", and polarization data is added to the feature only when the polarization data is available. In other words, when polarization data is available, "it is possible to perform image recognition more precisely" by superimposing the polarization data, than when only a normal brightness image is available.

(iii): According to the Equations (12) and (13), it is supposed that $I(0, (\varphi)$ is equal to $I(90, (\varphi)$ and "SDOP=0" in an image capturing process under direct light. However, the SDOP does not become zero in the actual calculation. The SDOP varies depending on the material of the object at which light is reflected. In view of this matter, "a coefficient of feature determined by the SDOP" is configured to be adjustable depending on whether the image capturing process is under direct light or backlight. Note that the SDOP of the entire screen is used to determine whether or not the image capturing process is under direct light.

(iv): In order to use an algorithm with normal brightness data, "a feature is made close to brightness". In other words, "only a relative amount" is used as a degree of polarization, and an absolute amount is not used as a degree of polarization. Regardless of the light-source state, the feature is made close to the brightness data to which the data of the size of the surface of an object at which light is reflected (i.e., the size of dispersion) is added.

The SDOP greatly varies depending on the angle: $\psi$ of the light source. However, when the relationship between materials A and B with a certain angle is A>B in size, A>B holds true with other angles.

The SDOP is greatly dependent on Kd of the material of an object to be captured and "the degree of Kd". For example, when an offset is zero with reference to the SDOP of the material A, whether the SDOP of the material B is on the positive side or on the negative side is not usually dependent on the angle of the light source.

In view of this matter, by removing the offset of the SDOP of the entire screen, "only the relative relation for each type of material" can be extracted regardless of the angle of the light source.

According to the reflection model described above with the Equations (12) and (13), the SDOP becomes close to zero in a direct-light state. For this reason, when the SDOP is used as polarization data, a feature becomes no longer influenced by polarization as the light-source state shifts to a direct-light state and the polarization data becomes no longer useful.

However, in actual experimental results, variations in the value of the SDOP are still present depending on the type of material when the image capturing process is under direct light. This is because the variations in SDOP values under direct light are different from "the variations in SDOP values under backlight". When the image capturing process is under direct light, such variations are detected to change the coefficient of feature determined by the polarization data.

Note that "the tendency of the SDOP to vary depending on the angle of the light source: $\psi$" is similar among various kinds of material. In view of the above circumstances, it is assumed that the entire capturing screen receives "light from a light source with the same angle of inclination", and whether the image capturing process under direct light or backlight is determined with reference to the value of the SDOP on the entire screen.

In view of the policies described above, the "feature" used for image recognition is defined as follows. The feature (output image): $I_{bright\_por}$ (x, y) to which polarization data is added is defined as in the following Equation (29).

$$I_{bright\_por}(x, y) = I_{bright}(x, y) + k \left[ SDOP(x, y) - \frac{\left( \sum\limits_{x}^{X} \sum\limits_{y}^{Y} SDOP(x, y) \right)}{X \cdot Y} \right] \qquad \cdots (29)$$

The "SDOP(x, y)" in Equation (29) is defined by the following Equation (30).

$$SDOP(x, y) = \{I_S(x, y) - I_P(x, y)\} / \{I_S(x, y) + I_P(x, y)\} \cdots (30)$$

<Configuration and Operation of Brightness-polarization Superposition Unit>

FIG. 11 is a functional block diagram of a brightness-polarization superposition unit that performs the processes of Formula 25 described above, according to the present example embodiment.

As illustrated in FIG. 11, the brightness-polarization superposition unit 30 includes a data generator 31, an offset removal unit 32, a superimposition unit 33, and a direct-light/back-light determination unit 34. The data generator 31 generates a brightness image and polarization data from the input image $I_1$. Here, the brightness image is generated using Equation (24). Moreover, the SDOP as the polarization data is generated using Equation (30). In the present example embodiment, $I_S$ (x, y) and $I_P$ (x, y) in these equations correspond to $I_1S(x, y)$ and $I_1P(x, y)$ described above in "<Intensity Correction of Polarized Component Data>".

The brightness image is input to the superimposition unit 33 just as it is. On the other hand, the polarization data is input to the offset removal unit 32. The functions of the direct-light/back-light determination unit 34 are described later.

The offset removal unit 32 performs "the second member in the square brackets" in the second member on the right side of Equation (29) for the input polarization data (SDOP). Then, the obtained calculation result is subtracted from the input polarization data (SDOP).

With the second member in the square brackets on the right side of Equation (29), "an average of the SDOP" within an area determined by X and Y on an image is calculated. Note that any area of X and Y may be determined.

Here, "the influence of the light-source state is cancelled over the entire screen", and the image area determined by X and Y is an area from which the area of the sky is removed from the entirety of the screen. Such an average of an image area as calculated above is an "offset", and the offset removal unit 32 subtracts the offset from the polarization data.

The polarization data from which the offset has been removed is input to the superimposition unit 33, and is superimposed on the brightness data. This superimposition is performed by calculating a linear sum of the brightness data: $I_{bright}$ (x, y) and "the value in the square brackets on the right side of Equation (29)" from which the offset has been removed, as depicted in the right side of Equation (29).

In so doing, the value in the square brackets is multiplied by the coefficient: k that is placed before the square brackets of the second member on the right side of Equation (29). The coefficient: k is defined by the following Equations (31) and (32).

$$k=k_1 \text{ if } \left[ SDOP(x, y) - \frac{\left( \sum_{x}^{X} \sum_{y}^{Y} SDOP(x, y) \right)}{X \cdot Y} \right] \geq TH \text{ (except cases of direct light) ... (31)}$$

$$k=k_2 \text{ if } \left[ SDOP(x, y) - \frac{\left( \sum_{x}^{X} \sum_{y}^{Y} SDOP(x, y) \right)}{X \cdot Y} \right] < TH \text{ (cases of direct light) ... (32)}$$

The calculation of Equation (31) and (32) is performed by the direct-light/back-light determination unit 34. In Equation (31) and (32), k1 and k2 are "polarization data superimposition coefficients". Moreover, "TH" indicates a "threshold" that is determined such that "the direct-light state is recognizable".

In other words, the direct-light/back-light determination unit 34 determines that the light-source state is in the direct-light state when the "offset" is smaller than the threshold: TH, and sets the polarization data superimposition coefficient: k to k2. On the other hand, the direct-light/back-light determination unit 34 determines that the light-source state is not in the direct-light state when the "offset" is greater than the threshold: TH, and sets the polarization data superimposition coefficient: k to k1.

Note that "the image area determined by X and Y" used for calculating an average (i.e., an offset) may be the entirety of the screen including the area of the sky. However, a better result is obtained when the area of the sky is removed because the sky "has different polarization states depending on the position of the sun".

When, for example, "a white line on the road" is to be detected, the surface reflection on a white line is smaller than the surface reflection on the other areas of the road, and the SDOP on a white line is smaller than the SDOP on the other areas of the road, except the cases with direct light. For this reason, it becomes possible to highlight the difference in brightness between white lines and asphalt (asphalt has lower brightness than white lines) by "making the polarization data superimposition coefficient: k1 become negative".

In the cases of direct light, "the relationship of SDOP between white lines and asphalt" is inverted, and thus it is desired that "the polarization data superimposition coefficient: k2 have a positive value or be equal to zero". When k2 is 0, "the superimposition of the polarization data is not at all performed".

In the above description, the SDOP is used as the polarization data. However, the DOP or polarization ratio described above may be used as the polarization data in Formula (29).

Because "subtraction or division" are performed to obtain polarization data as described above, noise tends to be amplified. For this reason, it is desired that noise reduction processes be performed for the obtained image with "polarization data such as SDOP". For example, calculation of a weighted average, a median filter, or a "ε filter" may be used to perform such noise reduction processes.

There is possibility that the obtained polarized image includes , for example, a "saturated area" in the obtained polarized image. For example, when $I_S(x, y)$ or $I_P(x, y)$ "has reached a level of saturation with the maximum value or the minimum value", the polarization data is not calculated with precision.

In such cases, it is desired that the value of k become zero "so as not to perform superimposition on the relevant area" or "output a constant" without performing any calculation.

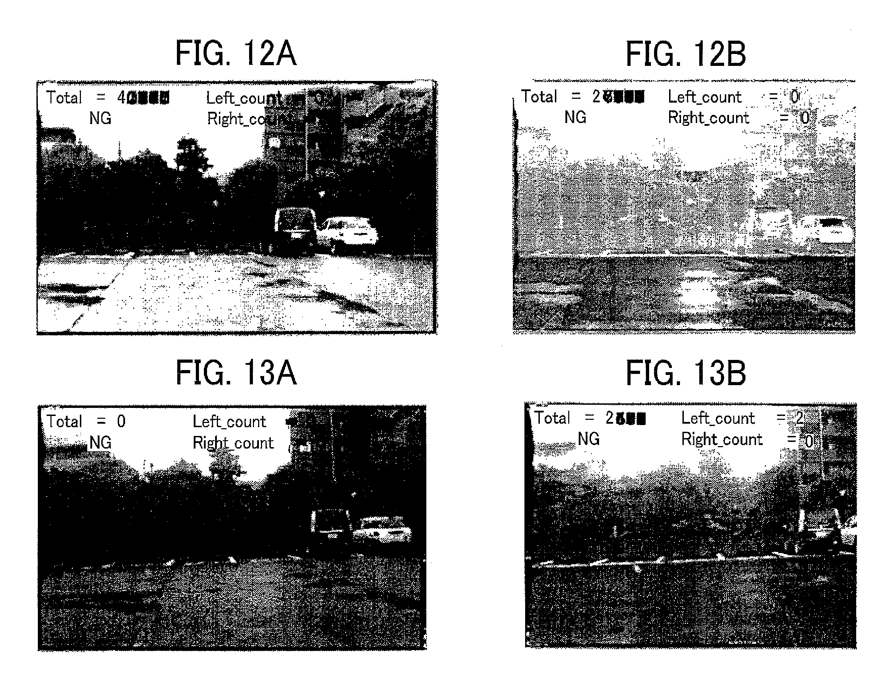

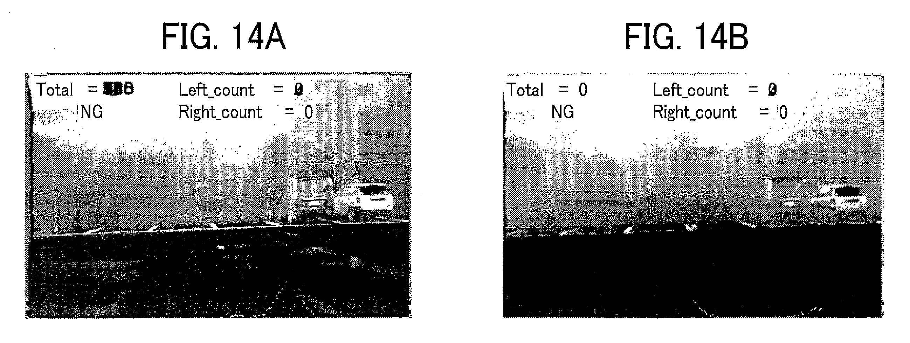

Next, the pictures that were actually taken to check the advantageous effects achieved according to the example embodiment are described below with reference to FIGS. 12 to 14. FIGS. 12A and 12B are examples of the brightness image and the polarized-light superposed image, respectively, which are directly captured without any windscreen by the imaging device 10 without operating the windscreen correction unit 20, according to the present example embodiment. FIGS. 13A and 13B are examples of the brightness image and the polarized-light superposed image, respectively, which are captured through a windscreen by the imaging device 10 without operating the windscreen correction unit 20, according to the present example embodiment. FIGS. 14A and 14B are examples of the polarized-light superposed image, which are captured through a windscreen by the imaging device 10 with operating the windscreen correction unit 20, according to the present example embodiment. These images were captured at the same place, and the time at which these images were captured is almost the same. The location is a parking lot. There are trees ahead of the parking lot, and an apartment building is located on the right side of the trees. When these pictures were taken, the weather was light rain, and the road was wet. There were two vehicles in the parking lot.

FIG. 12A is a brightness image, and FIG. 12B is a polarized-light superposed image. When the brightness image is compared with the polarized-light superposed image, the road surface of the parking lot is very bright, and the trees ahead of the road is very dark in the brightness image. Moreover, the apartment building is slightly dark in the brightness image. By contrast, the road surface of the parking lot is quite dark, and the trees ahead of the road is slightly bright, in the polarized-light superposed image. In both the brightness image and the polarized-light superposed image, the contrast between the road surface and the other areas is clear. Accordingly, it is easy to extract the area of the road surface.

FIG. 13A is a brightness image, and FIG. 13B is a polarized-light superposed image. In the brightness image of FIG. 13A, both the road surface and the other areas are darker than those of the brightness image of FIG. 12A. However, the contrast between the road surface and the other areas is still sufficient to extract the area of the road surface easily. In the polarized-light superposed image of FIG. 13B, however, the road surface and the other areas are almost equally dark, and the contrast between the road surface and the other areas is not clear. Accordingly, it is difficult to extract the area of the road surface.

FIG. 14A is a polarized-light superposed image where the parameter of correction algorithm $d_s$=0.2, and FIG. 14B is a polarized-light superposed image where the parameter of correction algorithm =1.0. In both FIGS. 14A and 14B, $c_s$=1.2. The improvement effect is greater when $d_s$=0.2, but the brightness of the polarized-light superposed images in both FIGS. 14A and 14B is close to the polarized-light superposed image in FIG. 12B where there is no windscreen, compared with the polarized-light superposed image in FIG. 13B where a windscreen intervenes. In other words, the contrast between the road surface and the other areas is improved in the polarized-light superposed images of FIGS. 14A and 14B.

In the example embodiment described above, the data generator 31 of the brightness-polarization superposition unit 30 generates a brightness image from the average of the S-polarized image and the P-polarized image. However, the generation of such a brightness image may be performed by the imaging device 10 or the combination between the imaging device 10 and the windscreen correction unit 20. In the example embodiment described above, the windscreen correction unit 20 corrects the S-polarized image or the P-polarized image, but the windscreen correction unit 20 may correct the polarization data (SDOP, DOP) that are not yet superimposed on a brightness image. In the example embodiment described above, the imaging device 10 obtains a P-polarized component for the pixel that includes the S-polarized component but the P-polarized component, and obtains a P-polarized component for the pixel that includes the P-polarized component but the S-polarized component. However, such obtaining processes of a P-polarized component may be performed by the combination between the imaging device 10 and the windscreen correction unit 20. The windscreen correction unit 20, the brightness-polarization superposition unit 30, the image processing/image recognition unit 40, and the vehicle controller 50 may be integrated into the imaging device 10. In the example embodiment described above, a device that includes an area-division polarizing filter with sub-wavelength structure (SWS) is used as the imaging device 10. However, a different kind of device may be used as the imaging device 10 as long as a polarized image can be captured. For example, various kinds of polarizing cameras (e.g., a camera having a polarizer in front of the lens for capturing a plurality of images whose polarizing angles are different from each other) disposed in JP-2011-150687 may be used as the imaging device 10. In the example embodiment described above, it is assumed that the windscreen is flat in the lateral direction, and correction is performed in view of only the vertical positions on an image (y-coordinate). However, actual windscreens are slightly bent in the lateral direction. For this reason, more precise polarization data may be obtained if correction is performed in view of the lateral positions on an image (x-coordinate).

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory cards, ROM, etc. Alternatively, any one of the above-described and other methods of the present invention may be implemented by ASICs, prepared by interconnecting an appropriate network of conventional component circuits, or by a combination thereof with one or more conventional general-purpose microprocessors and/or signal processors programmed accordingly.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

**Claims**

1.   An image processing device (20, 30, 40) for correcting polarized component data included in a polarized image captured by an imaging device (10) through a transparent member (60), comprising:

a correction unit (20) configured to correct pixels of the polarized image such that the intensity of the polarized component data included in the polarized image corresponds to the intensity of the polarized component of the incident light that has not passed through the transparent member (60), based on positions of the pixels of the polarized image and a relationship between intensity of polarized components of incident light to the positions of the pixels and an angle of inclination of the transparent member (60).

2.   The image processing device (20, 30, 40) according to claim 1, wherein the correction unit (20) corrects S-polarized component data.

3.   The image processing device (20, 30, 40) according to claim 1, wherein the correction unit (20) corrects P-polarized component data.

4.   The image processing device (20, 30, 40) according to claim 1, further comprising:

a pixel position data generation unit (15) configured to generate pixel position data indicating the positions of the pixels of the polarized image; and
a correction parameter storage unit (230a) configured to store a correction parameter indicating the positions of the pixels of the polarized image and the relationship between the intensity of the polarized components and the angle of inclination of the transparent member (60),
wherein the correction unit (20) corrects the intensity of the polarized component data based on the pixel position data and the correction parameter.

5.   The image processing device (20, 30, 40) according to claim 4, wherein the correction parameter storage unit (230a) stores a plurality of correction parameters corresponding to a plurality of values of the angle of inclination of the transparent member (60).

6.   The image processing device (20, 30, 40) according to any one of claims 1 to 5, further comprising:

a brightness image generation unit (31) configured to generate a brightness image from the polarized image corrected by the correction unit (20);

a polarization data generation unit (31) configured to generate polarization data from the polarized image corrected by the correction unit (20);

a brightness-polarization superposition unit (30) configured to superimpose the polarization data on the brightness image; and

an image recognition unit (40) configured to recognize an object in an imaging area of the imaging device (10), based on an output from the brightness-polarization superposition unit.

7. An image processing system (10, 20, 30, 40) comprising:

an imaging device (10) configured to obtain a polarized image; and

the image processing device (20, 30, 40) according to any one of claims 1 to 6.

8. A mobile object control apparatus (20, 30, 40, 50) comprising:

the image processing device (20, 30, 40) according to claim 6; and

a mobile object controller (50) configured to control an object according to a result of recognition performed by an image recognition unit (40) of the image processing device (20, 30, 40).

9. A method of processing an image, the method comprising:

obtaining a polarized image captured by an imaging device (10) through a transparent member (60); and

correcting (20) pixels of the polarized image such that the intensity of the polarized component data included in the polarized image corresponds to the intensity of the polarized component of the incident light that has not passed through the transparent member (60), based on positions of the pixels of the polarized image and a relationship between intensity of polarized components of incident light to the positions of the pixels and an angle of inclination of the transparent member (60).

10. The method according to claim 9, wherein the correcting (20) includes correcting S-polarized component data.

11. The method according to claim 9, wherein the correcting (20) includes correcting P-polarized component data.

12. The method according to claim 9, further comprising:

generating (15) pixel position data indicating the positions of the pixels of the polarized image; and

storing (230a) a correction parameter indicating the positions of the pixels of the polarized image and the relationship between the intensity of the polarized components and the angle of inclination of the transparent member (60),

wherein the correcting (20) includes correcting the intensity of the polarized component data based on the pixel position data and the correction parameter.

13. The method according to claim 12, wherein the storing (230a) includes storing a plurality of correction parameters corresponding to a plurality of values of the angle of inclination of the transparent member (60).

14. The method according to any one of claims 9 to 13, further comprising:

generating (31) a brightness image from the polarized image corrected by the correction unit (20);

generating (31) polarization data from the polarized image corrected by the correction unit (20);

superimposing (30) the polarization data on the brightness image; and

recognizing (40) an object in an imaging area of the imaging device (10), based on an output from the brightness-polarization superposition unit.

15. A carrier means carrying computer readable code for controlling a computer system (200) to carry out the method of any one of claims 9 to 14.

# FIG. 1

```
IMAGING      I₀   WINDSCREEN    I₁   BRIGHTNESS-            I₂   IMAGE PROCESSING/        VEHICLE
DEVICE ──────────▶ CORRECTION ──────▶ POLARIZATION ───────────▶ IMAGE RECOGNITION ─────▶ CONTROLLER
  10               UNIT  20           SUPERPOSITION UNIT  30    UNIT  40                  50
```

# FIG. 2

EP 2 889 807 A2

# FIG. 3

# FIG. 4

# FIG. 5

# FIG. 6

# FIG. 7

# FIG. 8A

# FIG. 8B

# FIG. 8C

# FIG. 8D

FIG. 9A
FIG. 9B
FIG. 9C
FIG. 9D

EP 2 889 807 A2

# FIG. 10

# FIG. 11

FIG. 12A

FIG. 12B

FIG. 13A

FIG. 13B

## FIG. 14A

Total = ▮▮▮  Left_count = 0
NG        Right_count = 0

## FIG. 14B

Total = 0   Left_count = 0
NG        Right_count = 0

EP 2 889 807 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011150687 A